# EUROPEAN PATENT APPLICATION

(11) **EP 1 170 685 A2**
(43) Date of publication of application: **09.01.2002**
(21) Application number: 01113030.9
(22) Date of filing: 28.05.2001
(51) Int. Cl.: G06F 17/60, G07F 7/10

(54) **IC card, settlement system and method with IC card**

(30) Priority: 29.06.2000 JP 2000196813
(71) Applicant: Hitachi, Ltd., Chiyoda-ku, Tokyo 101-8010 (JP); HITACHI CAPITAL CORPORATION, TOKYO (JP)
(72) Inventor: Ishibashi, Akira, c/o Hitachi, Ltd., Chiyoda-ku, Tokyo 100-8220 (JP); Sakashita, Masahiro, c/o Hitachi, Ltd., Chiyoda-ku, Tokyo 100-8220 (JP); Nakagawa, Masayuki, c/o Hitachi, Ltd., Chiyoda-ku, Tokyo 100-8220 (JP); Yoda, Takao, Minato-ku, Tokyo 105-0003 (JP); Takeda, Masashi, Minato-ku, Tokyo 105-0003 (JP)
(74) Representative: Strehl Schübel-Hopf & Partner

(57) **Abstract**

The invention relates to an IC card used for settlement, a settlement system employing the IC card and a settlement method where one IC card can be appropriately used by a member (customer) for a plurality of cooperation card companies. For that purpose, the IC card stores information of credit card numbers of a plurality of said card companies and each IC card has a plurality of credit card functions. Information about said member is previously registered in a card company processor which establishes the communication with a cooperation card company processor specified by a customer during the use of his IC card in a member shop. Thereby, a plurality of credit card functions are provided in one IC card, and also a plurality of account numbers are made correspond thereto.

## Description

### BACKGROUND OF THE INVENTION

### Field of the Invention

The present invention relates to An IC card used for settlement, a settlement system employing the same, and a settlement method.

### Description of the Related Art

With respect to cards generally used for the settlement (hereinafter, referred to as "existing cards" for short, when applicable), one card or a plurality of cards is/are respectively issued from the card companies, each of which a customer joins As a member, In order that the customer or his/her family may possess one card or a plurality of cards, and a single settlement account is made correspond thereto. For this reason, since if a customer joins in a number of card companies, then a number of cards are issued and also the settlement accounts are registered for the cards in such a way that the settlement accounts and the cards show one to one correspondence, if a customer uses one of a number of cards for his/her transaction, then the sum of money In the transaction is settled In the settlement account corresponding to that card.

By the way, in the present specification, the card company is meant by the subject which carries out the settlement for a customer with respect to the transaction performed by presenting a predetermined card by a customer.

As described above, since the existing card is issued by every card company, a customer who joins in a number of card companies must possesses a number of cards issued therefrom. So, carrying the cards becomes complicated as the number of cards is increased, and hence there is the possibility that the management of the cards does not become perfect. For this reason, there is possibility that in the actual use of the card, a customer carries another card and also presents the same by mistake.

In addition, the existing cards and the settlement accounts are made shown one-to-one correspondence. For example, in the case where an employee uses the existing card having a name of a corporation such as a company, while the employee as a name of a customer can use that existing card as the corporation, he/she can not use that existing card as a name of a private person. In the case as well where a customer is a private customer, the settlement account can not be used appropriately in correspondence to the expenditure. For example, it is impossible that the settlement accounts are provided separately for the life, the taste and the musement, or for the clothes, the food and the residence, respectively, and then a customer uses appropriately the settlement accounts whenever he/she uses the associated ones of the existing cards.

### SUMMARY OF THE INVENTION

In the light of the foregoing, it is an object of the present invention to provide an IC card with one of which a customer (user) can be used for a plurality of settlement accounts appropriately, a settlement system and a settlement method.

The above-mentioned object is based on the request of customers and the recognition of the problems, as will be described below. In the case where a customer possesses a plurality of accounts, if the plurality of accounts can be used appropriately for one IC card, then the request of a customer can be fulfilled. In order to fulfill the request of a customer, making the correspondence between one IC card and a plurality of accounts, and the control for the selection of an account to be used are important.

The above-mentioned object is attained by providing one IC card with the card functions of a plurality of card companies so that the proper use of card companies becomes possible with one IC card. In another aspect, a plurality of settlement accounts are made corresponded to one IC card, whereby the proper use of the settlement accounts becomes possible with one IC card. In still another aspect, the selection of an arbitrary settlement account from a plurality of settlement accounts made corresponded to one IC card can be made, whereby the degree of freedom for the card utilization becomes high.

### BRIEF DESCRIPTION OF THE DRAWINGS

Fig. 1 is a block diagram showing an example of a configuration of a settlement system according to an embodiment of the present invention;
Fig. 2 is a flow chart useful in explaining the processing in the whole settlement system;
Fig. 3 is a block diagram useful in explaining an example in which a plurality of existing cards are put together in an IC card;
Fig. 4 is a flow chart useful in explaining the processing when registering a member in a central apparatus;
Fig. 5 is a block diagram showing an example of a system configuration when selecting a plurality of accounts;
Fig. 6 is a flow chart useful in explaining the central apparatus when a settlement account is specified;
Fig. 7 is a diagram showing a transaction statement;
Fig. 8 is a flow chart useful in explaining the processing in a central apparatus which complies with the account specification from a transaction terminal;
Fig. 9 is a diagram useful in explaining an example of data structure in a storage device which is electrically connected to a central apparatus; and

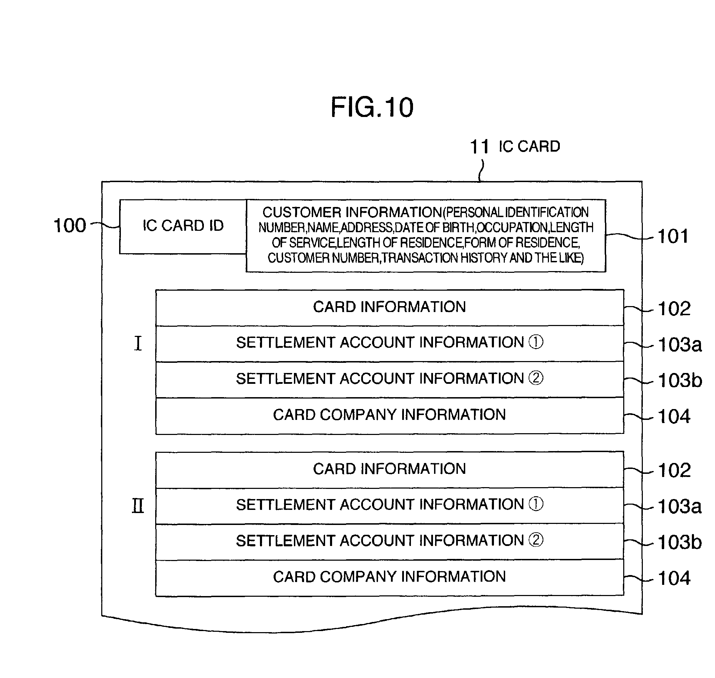

Fig. 10 is a diagram showing an example of data structure in an IC card.

Other objects and effects of the present invention will be apparent from the accompanying drawings and the description thereof.

### DETAILED DESCRIPTION OF THE EMBODIMENTS

Embodiments of the present invention will hereinafter be described in detail with reference to the accompanying drawings.

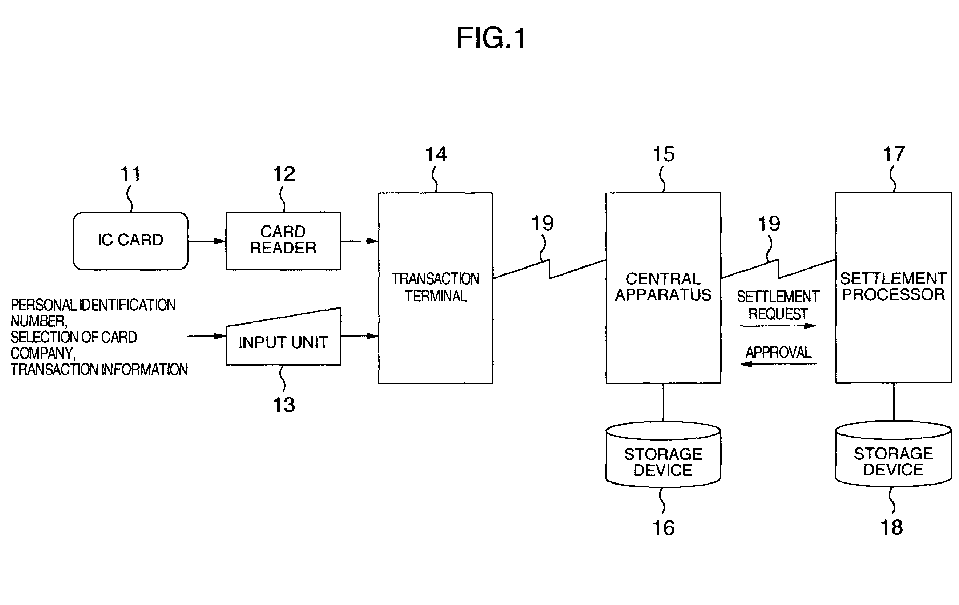

Fig. 1 is a block diagram showing an example of a configuration of a settlement system according to an embodiment of the present invention. In Fig. 1, reference numeral 11 designates an IC card; 12 designates a card reader; 13 designates an input unit; 14 designates a transaction terminal; 15 designates a central apparatus; 16 and 18 designate storage devices, respectively; 17 designates a settlement processor; and 19 designates a network such as a communication line or the internet. The transaction terminal 14, the central apparatus 15 and the settlement processor 17 may be constituted by a computer system called a personal computer or a server.

The card information (the card numbers, the holders of the card, the identifications of the card companies, the terms of validity for the cards, the utilizable services and the like) of a plurality of existing cards to be used is stored in the IC card 11. The IC card ID is stored in the IC card. The card information either may not be stored in the IC card but may be stored in the storage device 16 electrically connected to the central apparatus 15, or may be stored in both the IC card 11 and the storage device 16.

The transaction terminal 14 is installed in a shop or the like. The card reader 12 for reading out the information stored in the IC card 11, and the input unit 13 for inputting therethrough a personal identification number, card company specification information, transaction information and the like are bothelectrically connected to the transaction terminal 14. The card company specification information is meant by the information on the basis of which an arbitrary one of the existing cards information stored in the IC card 11 is specified.

The central apparatus 15 adapts to request the transactions among a plurality of card companies registered in the IC card 11 and to request the settlement processor 17 to carry out the settlement in the selected settlement account.

In addition, the information relating to a member who possesses the IC card 11 having a plurality of existing card functions is previously registered in the central apparatus 15.

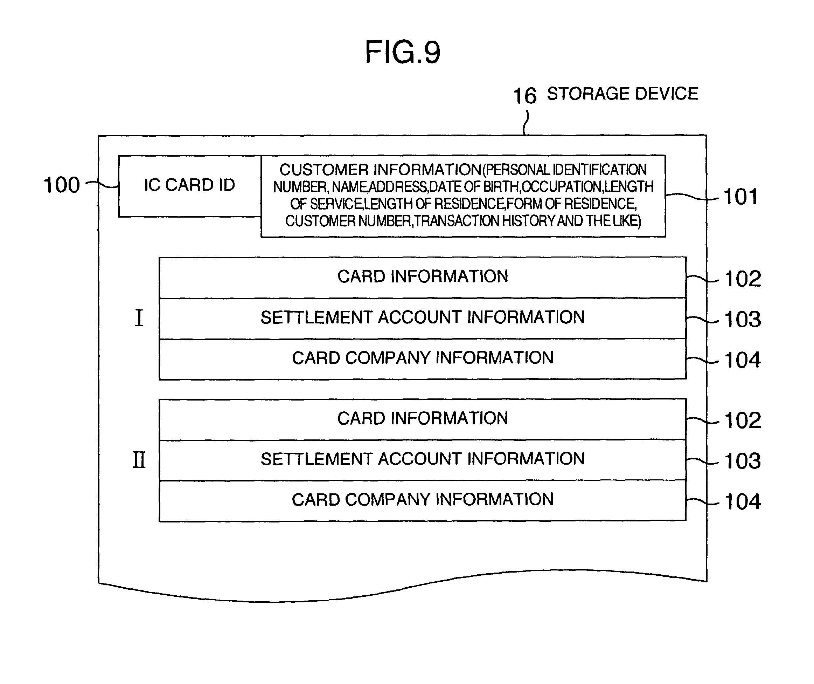

The storage device 16, as shown in Fig. 9, stores therein an IC card ID 100 on the basis of which the IC card 11 is identified, information relating to a customer as a possessor of the IC card (it will hereinafter be referred to as "customer information" for short, when applicable, and indicates, for example, a name, an address, the date of birth, an occupation, the length of service, the length of residence, the form of residence, a customer number, the transaction history and the like) 101, card information (a card number, an account holder, a personal identification number, the term of validity for the card and the like) 102 stored in the IC card, settlement account information (the identification information On the basis of which a financial institution is identified, the identifing information on the basis of which a branch is identified, an account number, the kind of account and the like) 103, and card company information (a card company identifier, a name of a card company, an address, data format of settlement request information and the like) 104, and manages such information so as to make such information correspond to one another. A plurality sets of card information 102, settlement account information 103 and card company information 104 are present as shown in the form of blocks I and II in Fig. 9.

But, the card information 102 and the settlement account information 103 either may be stored in the IC card 11 or may be stored in both the storage device 16 and the IC card 11.

The settlement processor 17 is the processor installed in a card company and adapts to execute the settlement processing in accordance with the input of predetermined data. For example, when the card used by a customer corresponds to the conventional credit card, the settlement processor 17 installed in the card company (the credit card company) requests the financial institution for managing the settlement account previously specified by a customer to carry out the settlement. On the other hand, when the card used by a customer corresponds to the so-called debit card, the settlement processor 17 installed in the card company (the financial institution) carries out the settlement of reducing the transaction correspondence amount from the settlement account of a customer and so forth. The settlement processor 17 has the storage device 18 for storing therein the customer information (a name, an address, a telephone number, a post code, the date of birth, the customer's place of work, a card number, a customer's personal identification number, the date of the contract, the term of validity for a card, transaction history, payment history, a financial institution for utilization, a name of a branch of a financial institution, the kind of account, an account number, the limited amount for utilization and the like). While simplified in Fig. 1, a plurality of settlement processors 17 electrically connected to the central apparatus 15 are present. Then, each of the settlement processors may manage a plurality of accounts for the same customer.

In Fig. 1, even when the card such as the normal credit card is used in a shop, the transaction terminal 14 is electrically connected to the card company issued the card of a customer to execute the same processing as that in the conventional case.

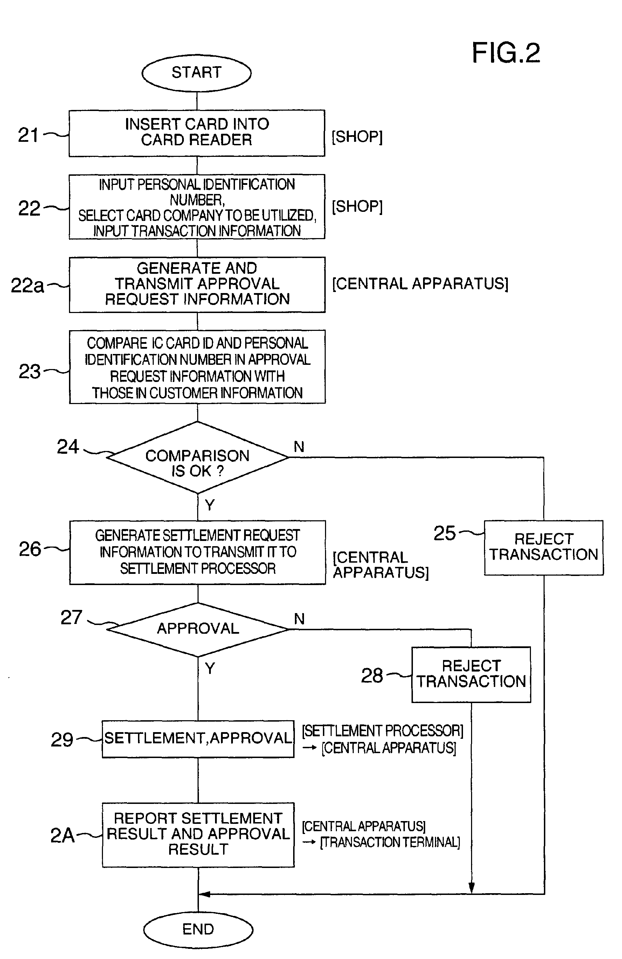

The operation of the system shown in Fig. 1 will hereinbelow be described with reference to a flow chart shown in Fig. 2.

When a customer uses the IC card 11, if the IC card 11 is inserted into the card reader 12 in a shop (Step 21), then the transaction terminal 14 reads out the IC card ID and a plurality of card information stored in the IC card 11.

At the time when the card company specification information, the customer's personal identification number and the transaction information (a name of member shop, a member shop code, the date and time of transaction, a purchased product(s), a sum of money in transaction, the payment method by a customer and the like) have been inputted through the input unit 13 (Step 22), the transaction terminal 14 generates approval request information on the basis of the card information, the transaction information, the customer's personal identification number, the IC card ID, the card company specification information and the like, which were all specified by the card company specification information to transmit the approval request information thus generated to the central apparatus 15 through the network 19 (Step 22a).

The central apparatus 15 received the approval request information from the transaction terminal 14 compares the customer's private code number and the IC card ID contained in the approval request information with the customer's private code number and the IC card ID 100 contained in the customer's information 101 stored in the storage device 16 (confirm whether or not a customer is the person himself or herself) and when the confirmation can not be obtained, informs the transaction terminal 14 of that the transaction can not be carried out to complete the processing (Steps 23 to 25).

On the other hand, if it is confirmed in Step 24 that a customer is the person himself or herself, then the central apparatus 15 generates the history information of the transaction on the basis of the transaction information and the card information to store the history information of the transaction thus generated in the storage device 16 (the illustration thereof is omitted here), and generates settlement request information containing the transaction information and the card information to transmit the settlement request information thus generated to the settlement processors 17 corresponding to the specified card information (Step 26). The settlement request information is generated in accordance with a predetermined data format and in correspondence to the settlement processors 17 from which the settlement request information is transmitted. The information relating to the predetermined data format is stored in the storage device 16 in the central apparatus 15 so as to be made corresponded to the card company ID (the illustration thereof is omitted here).

The settlement processor 17 judges on the basis of the transaction information and the card information contained in the received settlement request information whether or not the transaction can be approved. If the settlement processor 17 judges that the transaction can not be carried out, then the settlement processor 17 transmits the transaction rejection notification to the central apparatus 15. Thereafter, the central apparatus 15 transfers the transaction rejection notification thus received to the transaction terminal 14 (Steps 26 to 28).

On the other hand, if it is judged in Step 27 that the transaction can be approved, then the settlement processor 17 carries out the settlement processing to generate both the transaction approval notification and the transaction copy information and transmits such information as the approval information to the central apparatus 15 through the network 19 (Step 29).

The central apparatus 15 transfers the transaction approval information and the transaction copy information which have been received from the settlement processor 17 to the transaction terminal 14 through the network (Step 2a).

The transaction terminal 14 outputs both the transaction approval notification and the transaction copy information. The transaction copy information is printed out through an output terminal such as a printer to be offered to a customer.

In the case where the IC card ID is stored in the IC card 11, and the card information corresponding to the IC card ID is stored in the storage device 16 in the central apparatus 15, an embodiment described as follows may also be adopted.

The transaction terminal 14 receives as its input the IC card ID, which is stored in the IC card 11, through the card reader 12, and also receives as its input the transaction information from the input unit 13.

The transaction terminal 14 transmits the IC card ID thus received as its input to the central apparatus 15.

The central apparatus 15 receives the IC card ID, and with the received IC card ID as a key, retrieves the IC card ID in the storage device 16 and retrieves the card information 102, the settlement account information 103 and the card company information 104 which correspond to the IC card 11 (e.g., one of the blocks I, II and the like in Fig. 9) to transmit the card information thus retrieved to the transaction terminal 14.

The transaction terminal 14 outputs the received information in the visible form, and receives as its input the card company specification information through the input unit 13. Then, the transaction terminal 14 transfers the card company specification information thus received as its input to the central apparatus 15. In this connection, since the information outputted through the transaction terminal 14 has only to contain the information necessary for a customer to select one of the blocks I, II and the like in Fig. 9, the central apparatus 15 does not need to read out all of the information as described above from the storage device 16.

The central apparatus 15 generates the settlement request information on the basis of the card information 102 corresponding to the received card company specification information (corresponding to the card company information 104 in the storage device 16), the settlement account information 103 and the transaction information to transmit the settlement request information thus generated to the settlement processor 17 corresponding to the specified card company specification information. The subsequent processings are the same as those in the above-embodiment.

By the way, in the present embodiment, when the transaction terminal 14 receives the transaction rejection (Step 28 in Fig. 2), the card company specification information is transmitted from the transaction terminal 14 to the central apparatus 15 again, whereby the re-experimentation does not need to be carried out from the operation of reading out the contents of the IC card 11, and hence the processing procedure can be simplified.

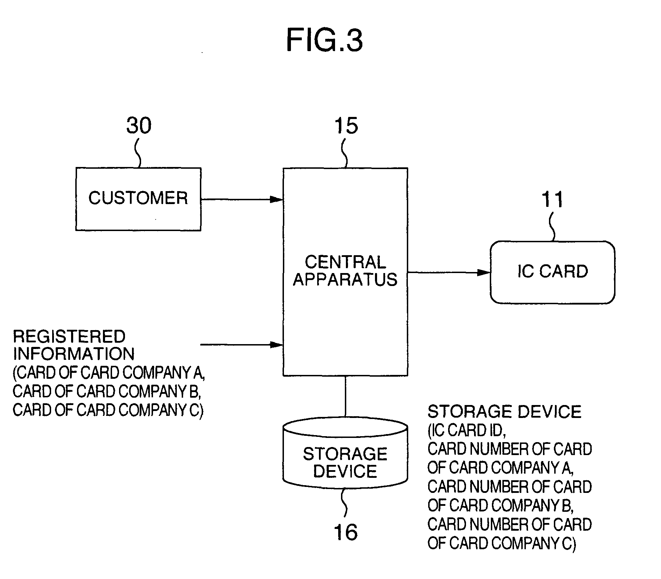

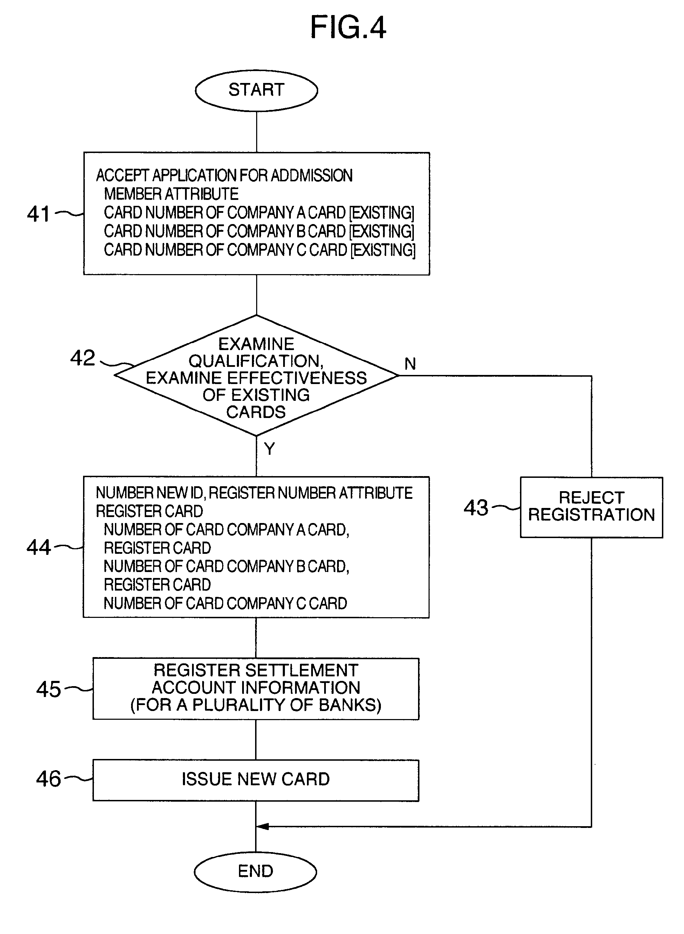

Fig. 3 is a block diagram useful in explaining an example in which a plurality of existing cards which a customer possesses are put together in the IC card 11, and Fig. 4 is a flow chart useful in explaining the processing when registering the IC card member in the central apparatus 15. In Fig. 3, reference numeral 30 designates a customer, and other reference numerals are the same as those in Fig. 1. The description will hereinbelow be given with respect to the processing of registering a member in the central apparatus 15 when registering a plurality of existing cards in the IC card 11.

As shown in Fig. 3, the customer 30 who possesses a plurality of existing cards and wants to put them together in one IC card 11 inputs the information relating to the customer himself/herself to the central apparatus 15 to register the information relating to the customer in the storage device 16 as a member. At this time, the customer 30 makes the central apparatus 15 read out the contents of the existing cards. In an example shown in Fig. 3, the customer 30 possesses the existing cards which were issued from the card companies A, B and C, respectively. The central apparatus 15 registers the card contents of the card companies, which have been inputted thereto, in the storage device 16 in accordance with the input of these card contents to issue the IC card 11 on the basis of such information.

In this connection, the operation of putting the existing cards together in the IC card 11 may be carried out in such a way that the content of a plurality of existing cards are read out from the card reader 12 to be processed through the transaction terminal 14. Also, a customer may access the central apparatus 15 by using the PC or the like to carry out the operation of putting the existing cards together in the IC card 11.

The processing of registering a card member in the central apparatus 15 is executed in accordance with the flow shown in Fig. 4.

The central apparatus 15 receives as its input the application of admission, the customer information as the member attribute, and the contents of the existing cards which a customer possesses (Step 41) to examine the qualification for a customer who has carried out the application and the effectiveness of the existing cards (Step 42). If the central apparatus 15 judges that a customer has not the qualification for application, then the registration is refused (Step 43). The examination of the qualification therefore is carried out in the same manner as that in the examination which has been conventionally carried out by the card companies. For example, the central apparatus 15 independently, or a person in charge of the examination carries out the examination interactively in conjunction with the central apparatus 15.

On the other hand, if the central apparatus 15 judges in the examination in Step 42 that a customer has the qualification of the application, the given IC card ID 100 and the customer information 101 are registered in the storage device 16, and also the contents of the existing cards which customer possesses are registered in the manner as I, II and the like of Fig. 9 (Step 44).

The central apparatus 15 makes a customer input the settlement account information used in the transaction to register the settlement account information in the storage device 16 to issue a new card, thereby completing the processing. The card contents of the existing cards are stored in the IC card 11. By the way, if a customer judges that only the settlement account information stored in the existing cards is enough, the processing in Step 45 is omitted. In Step 45, the information of a plurality of banks and a plurality of accounts can be inputted as the settlement account information to be registered (Steps 45 and 46).

In this connection, the procedure may be adopted to a way that the IC card ID is stored in the IC card itself, and the contents of the corresponding IC cards are stored in the storage device 16 which is electrically connected to the central apparatus 15.

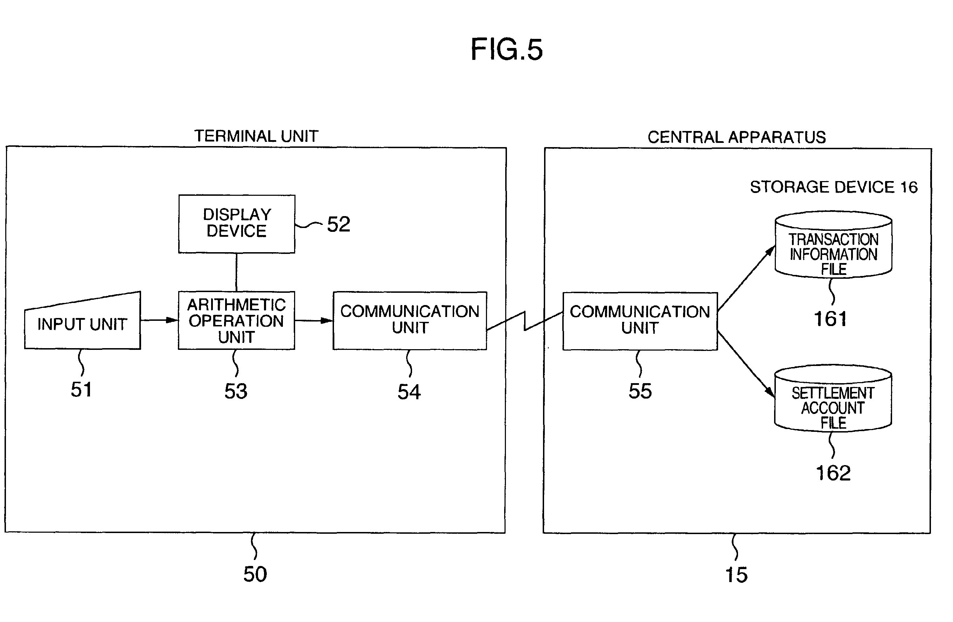

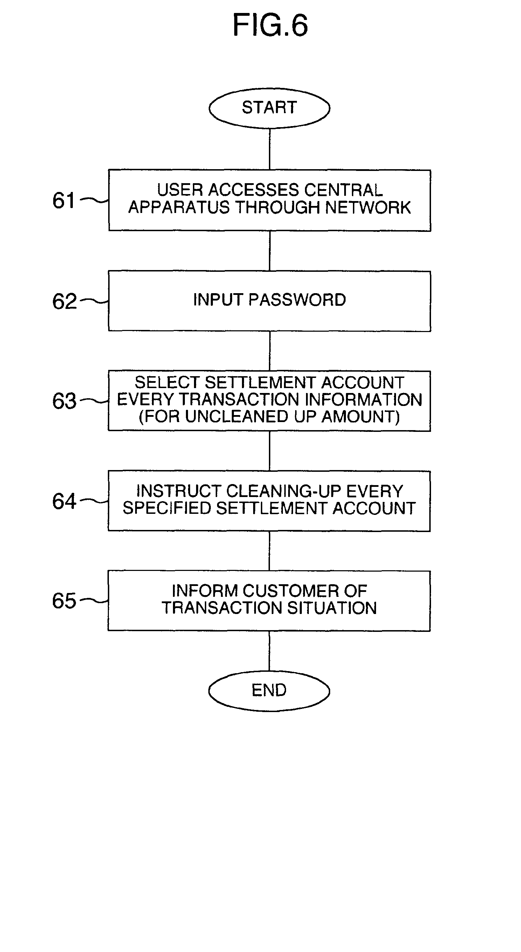

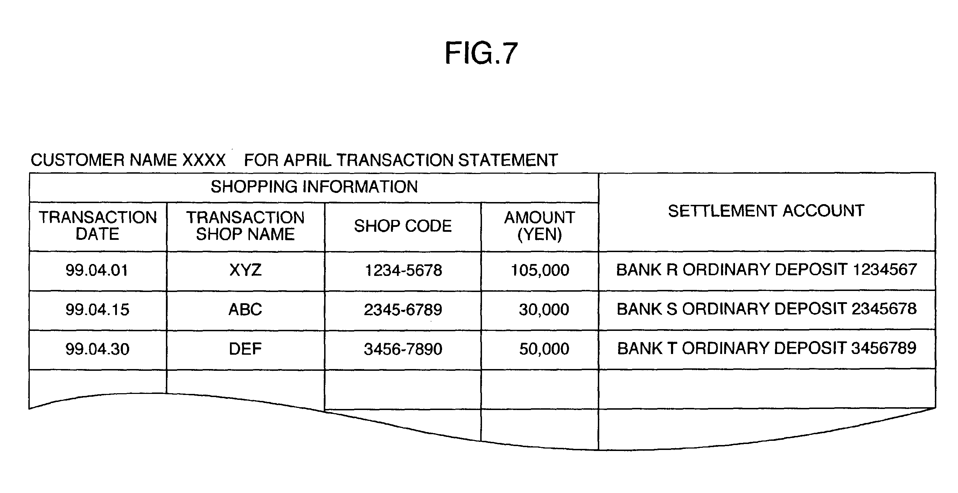

Fig. 5 is a block diagram showing an example of a system configuration in the case where a plurality of settlement accounts correspond to the IC card (having the information of one card or a plurality of cards), and a customer selects one of the settlement accounts. Fig. 6 is a flow chart useful in explaining the processing operation in the central apparatus 15 when one of the settlement accounts is specified. Fig. 7 is a diagram useful in explaining the transaction statement. In Fig. 5, reference numeral 50 designates a terminal unit, 51 designates an input unit, 52 designates a display device, 53 designates an arithmetic operation unit, 54 and 55 designate communication units, respectively, 161 designates a transaction information file, and 162 designates a settlement account number file, and other reference numerals are the same as those in Fig. 1. While the terminal unit 50 is illustrated so as to include the input unit 51, the terminal unit 50 does not essentially differ from the terminal unit 14 shown in Fig. 1 in terms of the computer system.

Now, the description will hereinbelow be given with respect to the case where a plurality of settlement accounts are made correspond to the IC card 11 as the settlement account information 103a and 103b, and a customer selects any one of the settlement accounts. The terminal unit 50 which a customer uses either may be the terminal unit 11 shown in Fig. 1, or may be the PC or the like which a customer possesses. In addition, the central apparatus 15 includes the communication unit 55 and also includes both the transaction information file 161 and the settlement account file 162 in the storage device 16.

In response to the specification of the settlement account by a customer, the central apparatus 15 generates the settlement account film 162 in such a way that the transaction shop for the shopping or the like, the date of the transaction and the settlement account are made correspond to one another.

Now, the specification of the settlement account in the central apparatus 15 will hereinbelow be described with reference to the flow shown in Fig. 6.

After completion of the transaction, a customer, by using the terminal unit 50, accesses the central apparatus 15 through the network such as the internet to input thereto the password (Steps 61 and 62).

The central apparatus 15 transmits both of the un-cleaned up transaction information of a customer of interest stored in the storage device 16, and the settlement account information exhibiting the account with which the un-cleaned up transaction can be cleaned up to the terminal unit 50 to make the display device display thereon such information. This transaction information, as shown in Fig. 7, contains the date of the transaction, the shop name for the transaction, the shop code, the sum of money in the transaction and the settlement accounts. But, in this case, all of the selectable settlement accounts do not need to be displayed, but the account previously registered as the default value may be displayed.

A customer selects the settlement account every transaction and transmits this selection information to the central apparatus 15 (Step 63).

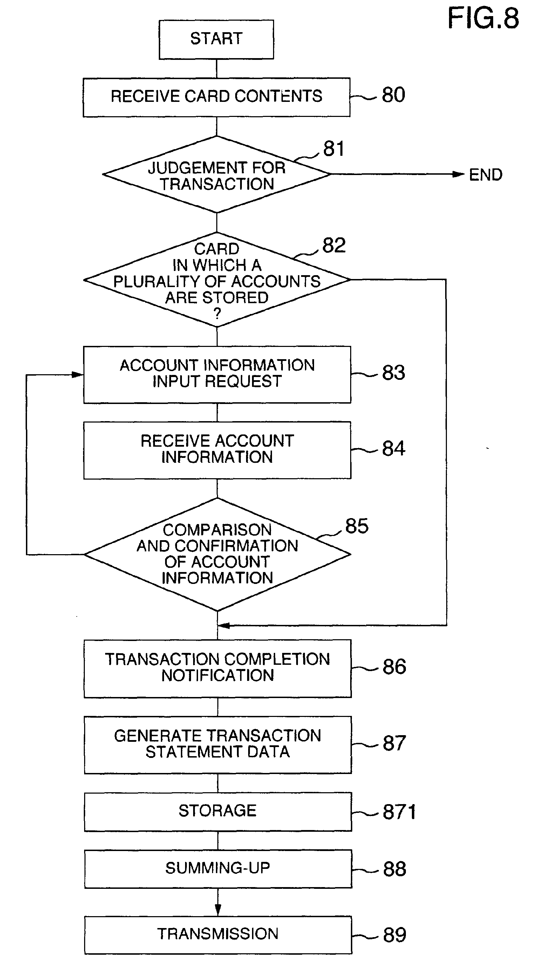

The central apparatus 15 instructs the cleaning-up every specified settlement account to send the transaction statement to a customer. In this transaction statement, as shown in Fig. 7, the settlement accounts specified by a customer are recorded (Steps 64 and 65). By the way, when a customer does not specify the settlement account until a predetermined due date, the account previously registered as the default value is decided as the settlement account. In addition, right after completion of the transaction such as the shopping, the settlement account may also be specified from the transaction terminal 14 by using the IC card. In this case, the central apparatus 15 having been accessed from the transaction terminal 14 executes the processing in accordance with the flow chart shown in Fig. 8.

The central apparatus 15 receives the card contents from the transaction terminal 14 to confirm whether or not the IC card 11 of interest is the handleable card. In this confirmation, the information relating to the IC card 11 stored in the storage device 16 is employed. When there is not such storage information, the central apparatus 15 may also access the settlement processor 17 which issued the existing card having the contents of the IC card 11 of interest to confirm whether or not the IC card 11 of interest is the handleable card (Step 81).

The central apparatus 15 judges whether or not the IC card 11 of interest is set in such a way as to be able to utilize a plurality of accounts (Step 82). After completion of the confirmation in Step 82, the central apparatus 15 transmits a settlement account information input request to the transaction terminal 14. The transaction terminal 14 receives as its input the inputted settlement account information to transmit the settlement account information thus transmitted to the central apparatus 15 (Steps 83 and 84).

The central apparatus 15 confirms the settlement account information, and after completion of the processing for the transaction, transmits the transaction completion notification to the transaction terminal 14 and also generates the data of the transaction utilization statement to store the data thus generated in the storage device 16 (Steps 85, 86, 87 and 871).

The central apparatus 15 sums up the data of the transaction statement in the storage device 16. For the summing-up, for example, the transactions which are identical in a customer, an account and the due date for settlement of accounts to one another are summed up every settlement processor 17 (Step 88). The central apparatus 15 sends the summed-up result of the transaction statement in Step 88 to the settlement processor 17. The summed-up result of the transaction statement is stored in the storage device 18 connected to the settlement processor 17 (Step 89). The processing in the central apparatus 15 can be realized in the form of a program. This program is stored in a portable recording medium such as a magnetic disc or an optical disc, or is provided through the network.

When the IC card 11 to which a plurality of settlement accounts are made corresponded is used in a member shop in which the transaction can be made, the central apparatus 15 can separate the transactions, which are made by using the IC card 11 having a plurality of transaction accounts, to sum up those transaction amounts every account to instruct the settlement.

As a result, the individual card companies issuing the cards do not need to execute the processing of separating the claims for a plurality of accounts, which customers have in the card companies themselves, every account.

In the above-mentioned embodiment, a customer can input the payment condition such as the revolving charge account payment in addition to the account information in the specification of the account. When the information relating to the payment condition is inputted, the central apparatus 15 instructs the settlement for the transaction on the basis of the method instructed by the settlement processor 17 in accordance with the payment condition.

In accordance with other embodiments, since a plurality of card information can be included in one IC card 11 and/or a plurality of settlement account numbers can be made correspond to one IC card 11, any of customers does not need to carry a number of cards about him/her. In addition, the transaction in which one of a plurality of card companies is specified can be carried out using one card, and in accordance with the specification made by a customer, the settlement can be carried out with an arbitrary settlement account of a plurality of settlement accounts every transaction. As a result, for example, the above-mentioned example of use of the corporation card becomes possible, and also it becomes possible that a housewife or the like in a household uses appropriately the accounts to be used every expenditure of the expense in the household economy, or uses appropriately the account to be used for the household economy and the account to be used for the private person. In addition, in the case where the IC card is used in the overseas voyage, when carrying out the payment on the basis of the conversion into foreign currency, an account of a financial institution which is cheep in the financial charge in the conversion into foreign currency can be specified.

As set forth hereinabove, according to the present invention, a customer (a user of a card) can use a plurality of settlement accounts with one card.

While the present invention has been particularly shown and described with reference to the preferred embodiments, it will be understood that the various changes and modifications will occur to those skilled in the art without departing from the scope and true spirit of the invention. The scope of the invention is therefore to be determined solely by the appended claims.

## Claims

1. A central apparatus (15) connected to a plurality of settlement processors (17) and a transaction terminal (14) through which the information is transmitted between said central apparatus and an IC card (11) in a settlement system for use in the transaction using said IC card, said central apparatus comprising:
a customer information storage unit (16) for storing therein IC card identification information on the basis of which said IC card is uniquely identified and a plurality of settlement processor information as information on the basis of which the associated one of said settlement processors is uniquely identified in such a way that the plurality of settlement processor information is made corresponded to the IC card identifier information;
an approval request accepting unit for receiving, through said transaction terminal, the IC card identification information, settlement processor specification information corresponding to any one of the plurality of settlement processor information made corresponded to the IC card identification information in said customer information storage unit, and transaction information containing transaction amount data; and
a settlement request unit for generating settlement request information on the basis of the transaction information and the settlement processor specification information to transmit the settlement request information thus generated to the settlement processor specified on the basis of the settlement processor specification information.

2. A method of settling transaction using an IC card (11), comprising the steps of:
storing IC card identification information on the basis of which said IC card is uniquely identified and a plurality of settlement processor information as information on the basis of which the associated one of said settlement processors is uniquely identified in such a way that the plurality of settlement processor information is made corresponded to the IC card identifier information;
receiving approval request information generated by a transaction terminal and contained the IC card identification information, the settlement processor specification information exhibiting any one of a plurality of settlement processor identification information made correspond to the IC card identification information, and transaction amount information;
generating settlement request information on the basis of the approval request information; and
transmitting the settlement request information to the settlement processor specified on the basis of the settlement processor specification information.

3. A settlement method according to claim 2, further comprising the steps of:
receiving answer information transmitted in response to the transmitted settlement request information by the associated one of said settlement processors;
judging whether or not the settlement processor approves the transaction on the basis of the answer information; and
when the transaction is approved, generating individual statement information exhibiting the transaction amount for a predetermined period of time every settlement processor identification information on the basis of the approval request information.

4. A settlement method according to claim 2, wherein said plurality of settlement processors, the associated one of which is identified on the basis of the settlement processor identification information is classified into a first settlement processor held by a person who manages a settlement account for use in the settlement of the transaction, and a second settlement processor held by the subject who/which receives the payment through the settlement account from the person who manages the settlement account.

5. A settlement method according to claim 4, wherein the settlement processor specification information includes first settlement processor specification information on the basis of which first settlement processor identification information corresponding to said first settlement processor is specified, and second settlement processor specification information on the basis of which second settlement processor identification information corresponding to said second settlement processor is specified.

6. A settlement method according to claim 2, wherein the information relating to a data format is stored therein in such a way as to be made correspond to the settlement processor identification information.

7. A computer system connected to a plurality of settlement processors (17) through a network (19), said computer system comprising:
a unit (13) for inputting therethrough information relating to the transaction;
a unit (12) for inputting therethrough the contents of an IC card (11);
a unit for selecting one of a plurality of settlement processor information contained in said IC card; and
an output unit for outputting therethrough the inputted contents of said IC card corresponding to the information relating to the transaction and the selection information to one of said plurality of settlement processors.

8. A computer system according to claim 7, wherein said input unit for inputting therethrough the transaction information, said input unit for inputting therethrough the contents of said IC card, and said selection information input unit are the units for inputting input information, which is inputted to an apparatus(es) different from said computer system, through said network.

9. A computer system connected to a plurality of settlement processors (17) through a network (19), said computer system comprising:
storage device (18) for storing therein information relating to the relationship between at least one of said plurality of settlement processors and a card (11);
a unit (13) for inputting therethrough information relating to a transaction;
a unit (12) for inputting therethrough information specifying said card;
means for specifying at least one, of said plurality of settlement processors, corresponding to the card specification information; and
an output unit for outputting therethrough the information relating to the transaction to one of said at least one settlement processor which is specified.

10. A computer system according to claim 9, wherein said specification means includes:
a unit for when a plurality of settlement processors corresponding to the card specification information are present, outputting the information relating to said plurality of settlement processors; and
an input unit for inputting therethrough the information specifying at least one of said plurality of settlement processors in correspondence to the output of the information relating to said settlement processors made by said output unit.

11. A computer system according to claim 9, wherein said storage device stores therein the information which is required for the settlement processing of the settlement processor corresponding to said card, and said output unit for outputting therethrough the transaction information outputs the information required for the settlement processing in said storage device.

12. A computer system connected to a settlement processor(s) (17) through a network (19), said computer system comprising:
a unit (13) for inputting therethrough the information relating to a transaction;
a unit (12) for inputting therethrough the contents of a IC card (11);
an input unit for inputting therethrough the information relating to a settlement account concerned with the transaction; and
an output unit for outputting therethrough the information relating to the transaction and the settlement account information to said settlement processor(S).

13. A computer system according to claim 12, wherein the plurality of settlement processors are present, wherein said computer system further comprises a unit for inputting therethrough the information on the basis of which one of the plurality of settlement processor information contained in said IC card, and wherein said output unit outputs the information relating to the transaction and the settlement account information to one of said plurality of settlement processors on the basis of the selection information.

14. A computer system according to claim 12, wherein the information relating to a plurality of settlement accounts is contained in the contents of said IC card, and the information relating to the plurality of settlement accounts contains therein the information on the basis of which one of the settlement accounts is selected from the information relating to the plurality of settlement accounts.

15. An IC card (11) comprising:
an area in which the information relating to a plurality of settlement processors (17) is stored; and
an area in which the information relating to settlement accounts is stored in correspondence to the information relating to said plurality of settlement processors,
wherein the information relating to said plurality of settlement processors is read out in correspondence to a transaction, and the information relating to the settlement accounts is read out in correspondence to the information on the basis of which one of said plurality of settlement processors is selected from the read out information relating to said plurality of settlement processors.

16. An IC card (11) comprising:
an area in which the information relating to settlement processors (17) is stored; and
an area in which the information relating to a plurality of settlement accounts is stored in correspondence to the information relating to settlement processors,
wherein the information relating to the plurality of settlement accounts is read out in correspondence to a transaction, and in correspondence to the information on the basis of which one of the plurality of settlement accounts is selected from the read out information relating to the plurality of settlement accounts, the transaction is settled through the selected settlement account.

17. A processing method for use in a computer system connected to a plurality of settlement processors (17) through a network (19), said processing method comprising the steps of:
inputting the information relating to a transaction;
inputting the contents of an IC card (11);
inputting the information on the basis of which one of the plurality of settlement processor information contained in said IC card is selected; and
outputting the inputted contents of said IC card corresponding to the information relating to the transaction and the selected information to one of said plurality of settlement processors on the basis of the selection information.

18. A processing method for use in a computer system which is electrically connected to a plurality of settlement processors (17) through a network (19) and which includes a storage device (18) for storing therein the information relating to the relationship between at least one of said plurality of settlement processors and a card (11), said processing method comprising the steps of:
inputting the information relating to a transaction;
inputting the information specifying said card;
specifying at least one, of said plurality of settlement processors, corresponding to the card specification information; and
outputting the information relating to the transaction to one of said at least one settlement processor which has been specified.

19. A processing method according to claim 18, wherein said specification step includes the steps of:
when the plurality of settlement processors corresponding to the card specification information are present, outputting the information relating to said plurality of settlement processors; and
inputting the information on the basis of which at least one of said plurality of settlement processors is specified in correspondence to the output of the information relating to said plurality of settlement processors.

20. A processing method according to claim 18, wherein said storage device stores therein the information required for a settlement processing of said settlement processors corresponding to said card, and information required for the settlement processing in said storage device and which corresponds to the output of the transaction information.

21. A processing method in a computer system connected to a settlement processor(s) (17) through a network (19), said processing method comprising the steps of:
inputting the information relating to a transaction;
inputting the contents of an IC card (11);
inputting the information relating to a settlement account concerned with the transaction; and
outputting the information relating to the transaction and the settlement account information to said settlement processor(s).

22. A processing method according to claim 21, wherein when the plurality of settlement processors are present, the information on the basis of which one of the plurality of settlement processor information contained in said IC card is inputted, and the information relating to the transaction and the settlement account information are outputted to one of said plurality of settlement processors on the basis of the selected information.

23. A processing method according to claim 21, wherein when the information relating to a plurality of settlement accounts is contained in the contents of said IC card, the information relating to the settlement account contains the information on the basis of which one of the information relating to the plurality of settlement accounts is selected.
